# EUROPEAN PATENT SPECIFICATION

(11) **EP 3 344 065 B1**
(45) Date of publication and mention of the grant of the patent: **09.11.2022**
(21) Application number: 16778471.9
(22) Date of filing: 05.09.2016
(51) Int. Cl.: A23K 50/80, A23K 10/30, A23K 20/163, A23K 20/111

(54) **FEED COMPOSITION FOR PREVENTION AND TREATMENT OF PARASITE INFECTION OF FISH**
FUTTERZUSAMMENSETZUNG ZUR PRÄVENTION UND BEHANDLUNG VON PARASITÄREN INFEKTIONEN BEI FISCHEN
COMPOSITION ALIMENTAIRE POUR LA PRÉVENTION ET LE TRAITEMENT D'INFECTIONS PARASITAIRES DES POISSONS

(30) Priority: 04.09.2015 NO 20151133
(43) Date of publication of application: 11.07.2018
(73) Proprietor: Ewos Innovation AS, 4335 Dirdal (NO)
(72) Inventor: PINO, Jorge, 5550000 Puerto Varas (CL); WADSWORTH, Simon, 9415 Harstad (NO); JODAA HOLM, Helle, 0464 Oslo (NO); SKUGOR, Stanko, 0366 Oslo (NO)
(74) Representative: Forresters IP LLP
(86) International application number: PCT/NO2016/000024
(87) International publication number: WO 2017/039454

(56) References cited:
- WO-A1-2011/119048
- WO-A1-2012/083446
- WO-A1-2016/134220
- WO-A2-2011/068415
- DATABASE WPI Week 200382 Thomson Scientific, London, GB; AN 2003-886450 XP002763655, & JP 2003 299445 A (NISSEI MARUKO SHIRYO KK) 21 October 2003 (2003-10-21)
- DATABASE WPI Week 201501 Thomson Scientific, London, GB; AN 2014-W64652 XP002763656, & CN 104 054 934 A (CHENG S) 24 September 2014 (2014-09-24)
- TRIPATHI ET AL: "Glucosinolates in animal nutrition: A review", ANIMAL FEED SCIENCE AND TECHNOLOGY, ELSEVIER, AMSTERDAM, NL, vol. 132, no. 1-2, 12 November 2006 (2006-11-12), pages 1-27, XP005762104, ISSN: 0377-8401, DOI: 10.1016/J.ANIFEEDSCI.2006.03.003

## Description

### Field of the invention

The present invention relates to a fish feed for the prevention and/or treatment of ectoparasite infections.

### Background of the invention

Sea lice (*Lepeophtheirus salmonis* and *Caligus rogercresseyi)* are the major pathogens affecting the global salmon farming industry and have a significant impact on many areas of production. Control measures have been largely reliant upon the use of a number of chemotherapeutants since the 1970's. Reduced efficacy has now been reported for many of these compounds and additional tools are required to effectively control sea lice.

The genus *Lepeophtheirus* are highly host-specific parasites and *L. salmonis* will only complete its life cycle on a narrow range of salmonid species. Despite having a more generalist life style, some *Caligus* species have also demonstrated a high degree of host-specificity. This adaption is more common to parasites within areas where a particular host population is abundant. Salmonids are the dominant host in some areas of Southern Chile for *Caligus rogercresseyi* and this parasite now demonstrates a high degree of host specificity. Successful adaption of parasites to a narrow range of species requires advanced mechanisms for host location, identification and attachment.

Sea lice have advanced olfactory and contact chemoreceptors that are capable of accurate identification of species specific host-molecules. Sophisticated glutamate ionotrophic receptors have recently been characterized for both *L. salmonis* as well as C. *rogercresseyi.* It has been shown that sea lice exhibit a number of directional responses to the specific compounds present in salmon mucus, including isophorone and 6-methyl-5-hepten-2-one. Conversely these positive responses are inhibited if odours such as 4-methylquinazoline and 2-aminoacetophenone from non-host species such as turbot *Psetta maxima* are detected.

Sea lice are unable to effectively suppress the immune system of non-host species. If lice attempt to settle onto an alternative fish species the subsequent immune response may well be lethal. Thus correct identification of the host is essential for attachment and survival for sea lice.

Japanese Patent Application 2003/299445 A and Chinese Patent Application 104054934 A both describe fish feed compositions containing mustard. Neither document indicates that the mustard is used to prevent or treat a parasite infection in the fish.

PCT Patent Application 2011/119048 A1 and discloses the use of alkadienals in fish feed compositions to prevent or treat a parasite infection in fish.

PCT Patent Application 2011/068415 A2 teaches to use an extract of garlic, rosemary, lavender or bog myrtle, disulfide or isothiocyanate compounds to prevent sea lice infections in salmon by disrupting the parasite's fish host identification process.

### Summary of the invention

The inventors of the present invention have found that glucosinolates (GSLs) are capable of inhibiting the attachment of ectoparasites to the host animal fed the GSLs.

These GSL compounds comprise a central carbon atom which is bound via a sulphur atom to a thioglucose group and via a nitrogen atom to a sulfate group. As defined by the formula (I) below, the R-group can differ among the various GSL compounds.

In a first aspect, the present disclosure relates to a fish feed composition comprising conventional feed ingredients such as lipids, proteins, carbohydrates, vitamins and minerals, characterized in the feed composition comprises a glucosinolate compound of formula (I); 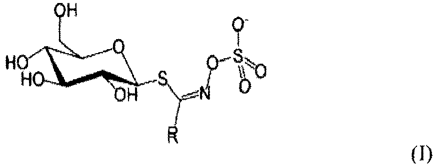 wherein R is an entity selected from the group consisting of allyl, phenyl, phenyl alkyl, napthyl, benzyl, C₁-C₄ alkyl, C₂-C₃ alkenyl and C₂-C₃-alkynyl.

In a preferred aspect is said R an allyl.

In a preferred aspect is said allyl -CH₂CHCH₂.

In preferred aspect are the phenyl alkyl phenyl methyl, phenyl ethyl or phenyl propyl.

In a preferred embodiment comprises the feed 0.5 - 15 µmol glucosinolate per gram feed, preferably 1.0.- 5 µmol per gram feed and more preferably µmol per gram feed.

A preferred aspect comprises the feed at 1.5 - 3.5 µmol glucosinolate per gram feed, more preferably about 3.1, 2.8 or 2.0 µmol glucosinolate per gram feed.

In a preferred aspect is mustard used as a source for the glucosinolate compound, i.e. the glucosinolate compound is a constituent of mustard, or the source for glucosinolate compounds are cruciferous vegetables such as horseradish, land cress, Kale, collard greens, Broccoli, Cabbage, sprouts, Kohlrabi, Broccoflower, Cauliflower, bok choy, Komatsuna, Mizuna, Rapini, Choy sum or Turnip.

According to the present invention, there is provided a fish feed composition for use in prevention and/or treatment of an ectoparasite infection in fish, wherein the composition comprises conventional feed ingredients such as lipids, proteins, carbohydrates, vitamins and minerals, characterized in the feed composition comprises a compound of formula (I); 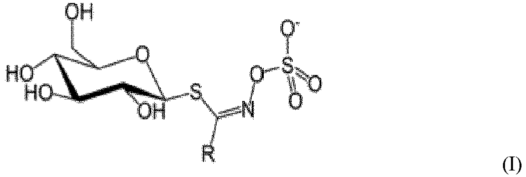 wherein R is an entity selected from the group consisting of allyl, phenyl, phenylalkyl, napthyl, benzyl, C₁-C₄ alkyl or C₂-C₃ alkenyl or C₂-C₃-alkynyl

The present invention also provides a fish feed composition for use in disruption of an ectoparasite's fish (host) identification process thereby treating or preventing an ectoparasite infection in fish, wherein the feed comprises conventional feed ingredients such as lipids, proteins, carbohydrates, vitamins and minerals, characterized in the feed is fed to said fish and that the composition comprises a glucosinolate compound of formula (I); 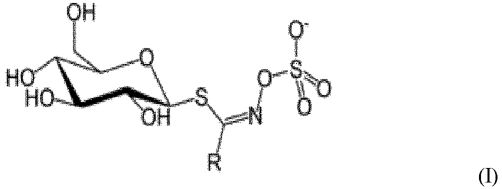 wherein R is an entity selected from the group consisting of allyl, phenyl, phenyl alkyl, napthyl, benzyl, C₁-C₄ alkyl, C₂-C₃ alkenyl and C₂-C₃-alkynyl.

The present invention furthermore provides a pharmaceutical composition for use in the prevention and/or treatment of an ectoparasite infection in fish, wherein said composition comprises a compound of formula (I); 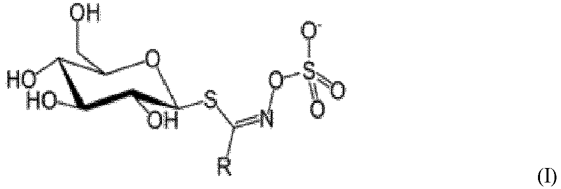 wherein R is an entity selected from the group consisting of allyl, phenyl, phenyl alkyl, napthyl, benzyl, C₁-C₄ alkyl or C₂-C₃ alkenyl or C₂-C₃-alkynyl.

Preferably, the composition comprises conventional feed ingredients such as lipids, proteins, carbohydrates, vitamins and minerals, characterized in the feed composition comprises a mustard.

Advantageously, said composition comprises mustard powder.

Conveniently, said mustard comprises glucosinolate, and wherein the feed comprises 0.5 - 15 µmol glucosinolate per gram of the feed, preferably 1.0 - 5 µmol per gram of the feed and more preferably µmol per gram of the feed.

Preferably, the fish feed inhibits the recognition and/or attractant between the ectoparasite and the fish.

Conveniently, wherein the fish feed improves the immune system of the fish.

Advantageously, the immune system of the fish is improved before the fish is infected with ectoparasites, or wherein the immune system of the fish is improved after the fish is infected with ectoparasites.

Conveniently, wherein said fish is a Salmonidae.

Advantageously, the Salmonidae is selected from the group consisting of Atlantic salmon, coho salmon, Chinook, rainbow trout, Arctic charr and other farmed salmon species.

Preferably, the ectoparasite is a copepodid ectoparasite.

Conveniently, said ectoparasite is sea lice.

Advantageously, said ectoparasite is *Lepeophtheirus salmonis,* and preferably wherein said ectoparasite is *Caligus rogercresseyi.*

Another aspect of the disclosure relates to a fish feed composition comprising conventional feed ingredients such as lipids, proteins, carbohydrates, vitamins and minerals, characterized in the feed composition comprises a mustard.

In a preferred aspect said composition comprises mustard powder.

In a preferred aspect said mustard glucosinolate, and wherein the feed comprises 0.5 - 15 µmol glucosinolate per gram of the feed, preferable 1.0.- 5 µmol per gram of the feed and more preferable µmol per gram of the feed.

The invention also provides a fish feed composition for use in prevention and/or treatment of a parasite infection, wherein the composition comprises conventional feed ingredients such as lipids, proteins, carbohydrates, vitamins and minerals, characterized in the feed composition comprises a mustard.

In a preferred aspect said composition comprises mustard powder.

A preferred aspect comprises said mustard glucosinolate, and wherein the feed comprises 0.5 - 15 µmol glucosinolate per gram of the feed, preferable 1.0.- 5 µmol per gram of the feed and more preferable µmol per gram of the feed.

A preferred aspect inhibits the fish feed the recognition and/or attractant between the parasite and the fish.

A preferred aspect improves the fish feed the immune system of the fish.

In a preferred aspect is the immune system of the fish improved before the fish is infected with parasites, or wherein the immune system of the fish is improved after the fish is infected with parasites.

### Description of the drawings

Figure 1 shows the levels of sea lice (*L. salmonis)* on Atlantic salmon 30 days post challenge.
Figure 2 shows the levels of sea lice (C. *rogercresseyi*) on Atlantic salmon 12 days post challenge.

### Experimental section

### Example 1

### Feeding and challenge

The treatment diets assessed during the study included Control (no Mustard A), Mustard A (3% mustard powder) and Mustard B (15% mustard powder), in three tank replicates. Mustard A is available from SAKAI Specie (Mustard Powder) and the glucosinolate (GSL) content in the fish feed are respectively 0, 1,97, 2,81 and 3,10 µmol GSL per gram of the feed composition.

Atlantic salmon at 450g were fed the experimental diets for 2 weeks pre-infection and 30 days post infection with *L. salmonis.* Fish were fed manually and feed was given 4 times a day in all tanks. To determine the feed consumption, uneaten feed was recovered 2 times a day.

During the period of 30 days post-infection, lice were allowed to reach the pre-adult stage before the sampling. During the 4-day sampling period, total numbers of lice on each fish were recorded on 20 fish per tank. Tissue samples (skin, spleen, and head kidney) from 10 salmon per tank were excised from the site caudally of the dorsal fin, placed in RNA-later at 4°C for 24 hours, prior to storage at - 80°. Tanks used in the study were 500L circular flow through tanks with an average seawater temperature of 8.7°C and salinity 27.4 ppt. Fish were individually weighed prior to the start of the feeding and at the sampling.

For the challenge, egg strings from *L. salmonis* were collected from anaesthetized host-fish (Finquel; 100mg/L), maintained in the facility. Infective copepodid stages were obtained following 14 days incubation. Fish were infected at an estimated rate of 50 copepodid stages per fish. Water flows were turned off, oxygenated (>7mg 1⁻¹) and depth reduced to 15 cm prior to the addition of copepodids. After 1 hour exposure, water flow was restored. An additional population of non-challenged fish were maintained and fed test diets (control, 3% mustard and 15% mustard) for the duration of the experiment. These were sampled for tissues (skin, spleen, and head kidney) at the end of the study.

### RNA extraction and cDNA synthesis

Total RNA extraction was performed with a combination of Trizol (GIBCOL, Life Technologies) and RNA-easy Mini Kit (Qiagen). Approximately 50 mg of tissue, 1 ml Trizol and 1.4mm zirconium oxide beads (VWR) was added to each sample, and homogenized in Fast-Prep 24 homogenizer (MP Bio-medicals) at 6.5 x G for 5 min twice with incubation on ice for 5 minutes in between the runs of homogenization. After incubation for 5 minutes at room temperature, 0.2ml of chloroform was added, and the samples were vortexed for 15 seconds, incubated at room temperature for 3 minutes followed by centrifugation at 10,000G for 15 minutes at 4°C to separate RNA into the supernatant. RNA cleanup (Qiagen protocol) was performed. Aliquot of 30µl of RNAse free H₂0 was added to the RNA. The concentration of RNA was determined by spectrophotometry using Nano-Drop ND1000 (Nanodrop Technologies). The RNA was stored at -80°C until further use. The integrity of total RNA was determined using an Agilent 2100 Bio-analyzer with RNA Nano-kits. Only samples with RNA integrity number (RIN) of 8 or higher were accepted.

### Microarray hybridization and data processing

All hybridizations were compared to pooled controls. The test fish were competitively hybridized on the microarray. Labelling and amplification of RNA was performed on 300ng total RNA using Two-colour Quick Amp Labelling Kit. For fragmentation, the Gene Expression Hybridization Kit was used. Hybridizations were performed for 17 hours at 65C with rotation speed 10rpm, followed by washing of arrays for one minute with Gene Expression Wash Buffer I at room temperature, and one minute immersion in Gene Expression Wash Buffer II at 37C. Slides were scanned immediately using Gene-Pix Personal 4100A scanner at 5 um resolution and with manually adjusted laser power to ensure an overall intensity ratio close to 1 between channels and with minimal saturation. The GenePix pro-software 6.0 was used for spot-grid alignment, feature extraction of fluorescence intensity values and assessment of spot quality. After filtration of low quality spots flagged by Gene Pix, Lowess normalization of log2-expression ratios (ER) was performed. Differentially expressed genes (DEGs) were selected by comparison with uninfected control: log2-ER>0.6 and p<0.05 in at least one group. Nofimas Atlantic salmon oligonucleotide microarray and bioinformatics system (STARS) were used for data transformation, a platform which includes 15k unique probes spotted in duplicate, the genes were annotated and enriched by functions and pathways.

Multivariate analyses (principal component analysis and partial least squares regression) were performed by using Un-scrambler software (version 10.3, Camo Process AS, Oslo, Norway). PCA (unsupervised method) was performed with data normalized by standard deviation. PLSR analysis (supervised method) was used to predict different dietary groups under lice infection. PLSR was also used to make a model where lice numbers in three infected dietary groups are explained by gene expression, but without including the dietary group information. For PLSR analysis, microarray expression data were analyzed non-weighted to ensure that larger changes in gene regulation contribute more to the model as suggested by (Oust et al., 2006). Leverage validation was performed after the analysis. Missing log2-ER values were filled using The Un-scrambler software based on row and column means.

### qPCR protocol

A total of 9 fish from each tank were analyzed by qPCR, to validate the microarray data and search for other potential gene candidates of interest. For each sample, 1800ng of RNA was subjected to cDNA synthesis using the cDNA Affinity Script (Agilent Technologies) following the manufacturer's protocol. For each reaction, 1µl of random primers and 2µl of oligo DT primers were used. The synthesized cDNA was diluted 10 times by adding 180µl of RNase free water and stored at -20°C until further use. For each gene, 4µl of cDNA was run in duplicates from each fish, with the addition of specific primers based on published sequences at 10 µl concentration in addition to Light-Cycler 480 SYBR Green I Master mix (Roche) to a final volume of 12µl. Cycles were run in Light-Cycler 480 instrument (Roche, Applied Science) in 96 well plates. Running conditions were 5 min denaturation step at 95°C, 40 cycles of denaturation (10s at 95°C), annealing (20s at 60°C) and extension (15s at 72°C), and all cycling runs were terminated by melting curve analysis where the fluorescence was measured during temperatures from 65°C-97°C. The crossing point value was calculated by using the maximum-second-derivative method (Roche diagnostics). Relative expression of target genes was evaluated using the ΔΔCt method with comparison to reference gene Efla; significant differences were assessed using one-way ANOVA with subsequent Tukey's multiple comparisons test in the Graph-Pad Prism Software. Specificity of the PCR amplicon could be confirmed by melting curve analysis. PCR efficiency was calculated from two fold serial dilutions of cDNA for each primer pair in triplicates, PCR efficiency ranged from 1.8-2.

### Results from example 1

### Efficiency - Attachment of sea lice (L. salmonis)

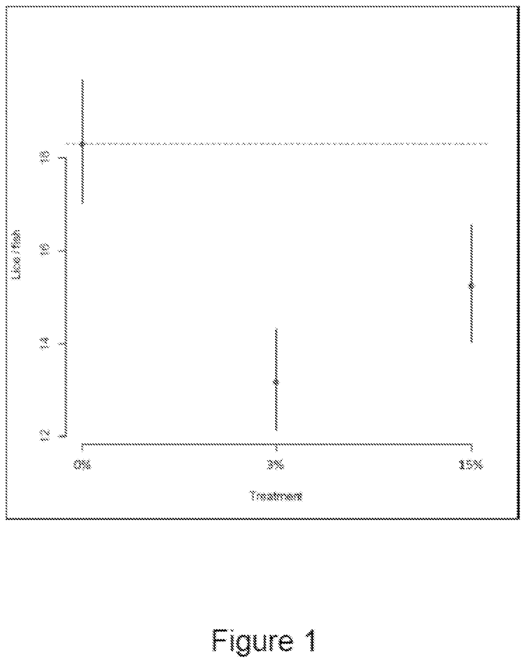

There was a significant reduction of >25% in the levels of *L. salmonis* observed on the fish fed diets containing glucosinolates, compared to controls (Figure 1) at 30 days post-challenge. The lower dose of 3.10 µmol glucosinolates per gram feed composition (3% dietary inclusion of mustard) achieved a greater reduction in sea lice compared to the higher dose of 15.50 µmol glucosinolates per gram feed composition (15% dietary inclusion of mustard).

### Gene expression

The microarray and specific qPCR results showed differences between gene up-regulation in salmon responses between the control and treatment groups. Higher levels of immune genes associated with Type 1 (Th1) were associated with the fish fed glucosinolates diets compared to controls. These included a range of cytokines (IL-8), chemokines (CCL-19), anti-microbial peptides (cathelecidin), acute phase proteins (complement-C3a) as well as extracellular matrix remodeling proteins (MMP; wound healing). Infection by the sea lice also induced changes in the gene expression between the dietary groups. The pro-inflammatory *myeloperoxidase* (MPO) was significantly up-regulated post sea lice infection, in the fish fed the mustard diets (data not shown).

In addition to pro-inflammatory responses, over 50 interferon (IFN) related genes were induced by the glucosinolates diets. These are known to have important anti-viral activity as well as acting as receptors, intracellular activity and effector genes. A number of genes associated with iron metabolism were induced by the mustard diets including *golgi residing metallo-reductase STEAP4* and *serotransferrin-1.* Within the fish fed mustard a number of key genes were down regulated including makers for tissue remodeling and myofiber proteins. *Fast myotomal muscle troponin-T1* had a 9-fold reduction in expression in mustard fed groups compared to controls.

In contrast the fish fed the control diets showed induction of a number of genes associated with Type 2 (Th2) immune responses. These included genes involved in tissue differentiation, remodeling and extra-cellular matrix (TGF_{β}). *Pro-aptoptotic lymphocyte marker G0*/*G1switch protein* was induced in the control fed fish and this has previously been associated with increased susceptibility to sea lice. *Leukolectin,* a well know gene for anti-inflammatory Th2 pathways, was also upregulated in the controls. *Sex hormone binding globulin beta glycoprotein was induced,* increasing the regulation of steroid and hormonal metabolism.

The levels of allyl glucosinolates were assessed to 0.490 µmol g⁻¹, in the mustard powder used as a source of glucosinolate.

### Example 2

### Effect of various concentrations of glucosinolates on salmon infected with C. rogercresseyi

Glucosinolates were assessed at 4 levels of dietary inclusion of 0, 1,97, 2,81 or 3,10 µmol glucosinolate per gram feed, i.e. 0, 1%, 2%, or 3% of Mustard, respectively. Dietary groups were assessed in 3 replicates, with 30 fish per tank. Atlantic salmon of 120g were fed the experimental diets for 21 days pre-infection and 12 days post infection with *C. rogercresseyi* (challenge method, as trial 1). During the 3-day sampling period, total numbers of lice on each fish were recorded on 30 fish per tank. Tanks used in the study were 500L circular flow through tanks with an average seawater temperature of 12°C and salinity 32ppt. Oxygen saturation was maintained at 80%.

A series of fish tissue samples were taken for qPCR as well as microarray analysis to assess host-response to the sea lice (as described in example 1). In addition sea lice were sampled at different developmental stages (naupli I, naupli II, chalimus III-IV, adult male and adult female) to assess genes responses of the sea lice to the host (with and without masking compounds). Genes were assessed using RNA-seq as well as qPCR techniques in accordance with the methods described in Núñez-Acuña et al. (2014).

### Results - example 2

### Attachment of sea lice (C. rogercresseyi)

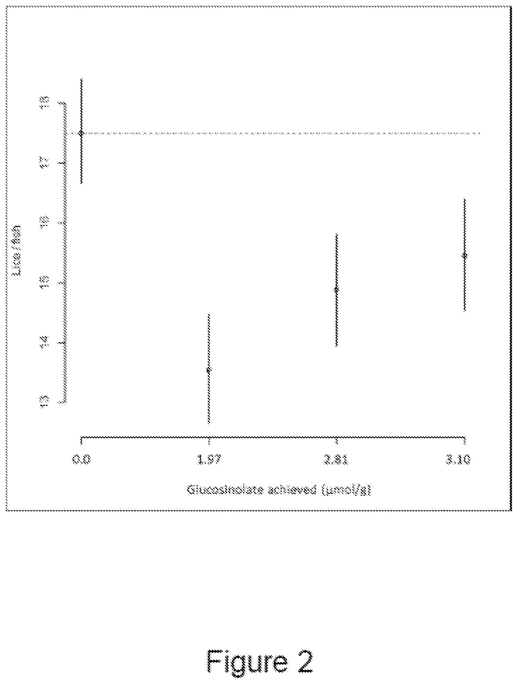

There was a significant reduction of up to 22% in the levels of *C*. *rogercresseyi* observed on the fish fed diets containing mustard, compared to controls (figure 2) at 12 days post-challenge.

### Gene expression

A total of 9 genes were identified in C. *rogercresseyi* for ionotrophic receptors, including the specialized glutamate ionotrophic receptors (IGluR). The functions of these genes were associated with receptor activities, such as transport channels and trans-membrane signaling. The expression of 5 of the receptor genes varied between the developmental stages of the sea lice (data not shown). The receptor gene *Ionotrophic kainite receptor 2-like-(1)* was highly expressed in the juvenile and attachment stages of sea lice (data not shown).

The specific qPCR results showed an increased gene expression of *Ionotrophic kainite receptor 2-like-(1)* in the lice that had been exposed to fish fed mustard (data not shown).

A total of 31 genes related to type-1 (Th-1) pro-inflammatory responses were upregulated in the fish fed the mustard diets. These included immune parameters such as IL-8, toll like receptors pathways (cathepsin) (data not shown)), complement, as well as nucleotide-binding oligomerization domain receptors (NOD).

Levels of glucosinolate were analyzed at a 3^{rd} party laboratory (Table 1) in accordance with the method of Daun, J.K. and McGregor, D.I., Glucosinolate Analysis of Rapeseed (Canola), Method of the Canadian Grain Commission Grain Research Laboratory (December 15, 1981, and were calculated to 3,10, 2,81 and 1,97 µmol glucosinolate per gram feed. Effective doses ranged between 6 and 2umol g⁻¹.

### Conclusions

The inclusion of dietary GSL significantly reduced the infection of sea lice on Atlantic salmon. Without being bound by theory is might be that mode of action is a combined effect on the disruption of the host-identification processes, as well as a subsequent improvement in immunity of the salmon against the lice, following infection. The effect of reduced lice infection was observed for both *L*. *salmonis* as well as C. *rogercresseyi.*

Significant reduction was observed for *C*. *rogercresseyi* down to 1%. For *L. salmonis* the effective dose tested was 3%.

Sea lice rely on the detection of specific compounds in order to identify the host and initiate the attachment process. Presenting lice with different host-specific compounds can disrupt this stimulation and reduce the quantity of immune suppressive factors released.

The inventors have shown that there was a marked differentiation in the direction and amplitude of the immune responses between the dietary groups. Fish fed the mustard diets showed induction and maintenance of Type 1 (Th1) pro-inflammatory genes relating to cytokines (IL-8), chemokines (CCL-19), anti-microbial peptides (cathelecidin), acute phase proteins (complement-C3a) as well as extracellular matrix remodeling proteins (MMP; wound healing). Specific genes such as pro-inflammatory *myeloperoxidase* (MPO) was significantly up-regulated in the fish fed the mustard diets. The control groups showed induction of a number of genes associated with Type 2 (Th2) immune responses including genes involved in tissue differentiation, remodeling and extra-cellular matrix (TGFp). Genes such as *leukolectin,* a well know gene for anti-inflammatory Th2 pathways, was also upregulated in the controls. The effect of dietary mustard on the immune pathways remained consistent between *L. salmonis* and C. *rogercresseyi.*

Sea lice are highly effective at suppressing the immune system as well as diverting the remaining responses from Type 1 to a more generalized systemic, Type 2 pathway. The diversion is thought to significantly increase susceptibility of Atlantic salmon to sea lice infection. Maintaining overall immunity and more effective pathways represents a significant development in sea lice control.

The anti-viral defenses of fish are closely ties to the Type 1 responses. When these are downregulated and diverted by sea lice infection there is a profound increase in the susceptibility of the fish to viral diseases. The inventors of the present invention has shown that mustard fed fish has consistently higher anti-viral defenses, with over 50 interferon (IFN) related genes being induced, compared to controls. This protection was maintained pre-infection as well as during the challenge.

Differential gene responses within the sea lice were also observed. Lice exposed to fish fed dietary mustard showed increased responses within a number of ionotrophic receptors such as *ionotrophic kainite receptor 2 like-(1).*

The active ingredient of the present invention is glucosinolates, and mustard has been used as a source of GSL.

## Claims

1. A fish feed composition for use in prevention and/or treatment of an ectoparasite infection in fish, wherein the composition comprises conventional feed ingredients such as lipids, proteins, carbohydrates, vitamins and minerals, **characterized in** the feed composition comprises a compound of formula (I); 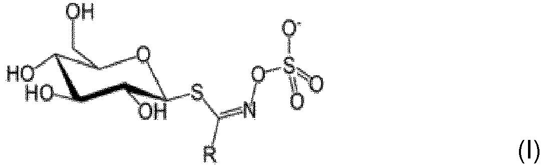 wherein R is an entity selected from the group consisting of allyl, phenyl, phenylalkyl, napthyl, benzyl, C₁-C₄ alkyl or C₂-C₃ alkenyl or C₂-C₃-alkynyl

2. A fish feed composition for use in disruption of an ectoparasite's fish (host) identification process thereby treating or preventing an ectoparasite infection in fish, wherein the feed comprises conventional feed ingredients such as lipids, proteins, carbohydrates, vitamins and minerals, **characterized in** the feed is fed to said fish and that the composition comprises a glucosinolate compound of formula (I); 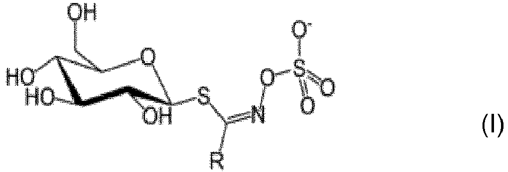 wherein R is an entity selected from the group consisting of allyl, phenyl, phenyl alkyl, napthyl, benzyl, C₁-C₄ alkyl, C₂-C₃ alkenyl and C₂-C₃-alkynyl.

3. A pharmaceutical composition for use in the prevention and/or treatment of an ectoparasite infection in fish, wherein said composition comprises a compound of formula (I); 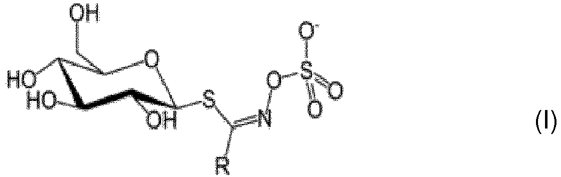 wherein R is an entity selected from the group consisting of allyl, phenyl, phenyl alkyl, napthyl, benzyl, C₁-C₄ alkyl or C₂-C₃ alkenyl or C₂-C₃-alkynyl.

4. A fish feed composition for use in prevention and/or treatment of an ectoparasite infection in fish, wherein the composition comprises conventional feed ingredients such as lipids, proteins, carbohydrates, vitamins and minerals, **characterized in** the feed composition comprises a mustard.

5. A fish feed for use according to claim 4, wherein said composition comprises mustard powder.

6. A fish feed for use according to claim 5, wherein said mustard comprises glucosinolate, and wherein the feed comprises 0.5 - 15 µmol glucosinolate per gram of the feed, preferably 1.0.- 5 µmol per gram of the feed and more preferably µmol per gram of the feed.

7. A fish feed for use according to any of the claims 1 to 2 or 4 to 6, wherein the fish feed inhibits the recognition and/or attractant between the ectoparasite and the fish.

8. A fish feed for use according to any of the claims 1 to 2 or 4 to 6, wherein the fish feed improves the immune system of the fish.

9. A fish feed for use according to claim 8, wherein the immune system of the fish is improved before the fish is infected with ectoparasites, or wherein the immune system of the fish is improved after the fish is infected with ectoparasites.

10. A fish feed for use according to any of the claims 1 to 2 or 5 to 9, wherein said fish is a Salmonidae.

11. A fish feed for use according to claim 10, wherein the Salmonidae is selected from the group consisting of Atlantic salmon, coho salmon, Chinook, rainbow trout, Arctic charr and other farmed salmon species.

12. A fish feed or composition for use according to any preceding claim, wherein the ectoparasite is a copepodid ectoparasite.

13. A fish feed or composition for use according to any preceding claim, wherein said ectoparasite is sea lice.

14. A fish feed or composition for use according to claim 13, wherein said ectoparasite is *Lepeophtheirus salmonis*, and preferably wherein said ectoparasite is *Caligus rogercresseyi.*

## Patentansprüche

1. Fischfutterzusammensetzung zur Verwendung bei der Vorbeugung und/oder Behandlung einer Ektoparasiteninfektion bei Fischen, wobei die Zusammensetzung herkömmliche Futterbestandteile umfasst, wie Lipide, Proteine, Kohlenhydrate, Vitamine und Mineralien, **dadurch gekennzeichnet, dass** die Futterzusammensetzung eine Verbindung der Formel (I) umfasst; 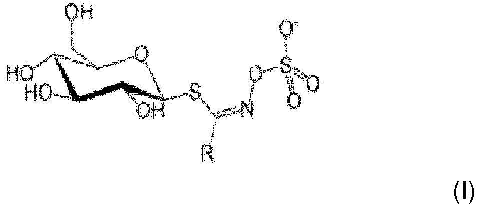 wobei R eine Einheit ist, die ausgewählt ist aus der Gruppe bestehend aus Allyl, Phenyl, Phenylalkyl, Napthyl, Benzyl, C₁-C₄-Alkyl oder C₂-C₃-Alkenyl oder C₂-C₃-Alkinyl.

2. Fischfutterzusammensetzung zur Verwendung bei der Unterbrechung eines Fisch(wirt)identifikationsprozesses eines Ektoparasiten, wodurch eine Ektoparasiteninfektion bei Fischen behandelt oder verhindert wird, wobei das Futter herkömmliche Futterbestandteile umfasst, wie Lipide, Proteine, Kohlenhydrate, Vitamine und Mineralien, **dadurch gekennzeichnet, dass** das Futter an die Fische verfüttert wird, und dass die Zusammensetzung eine Glucosinolatverbindung der Formel (I) umfasst; 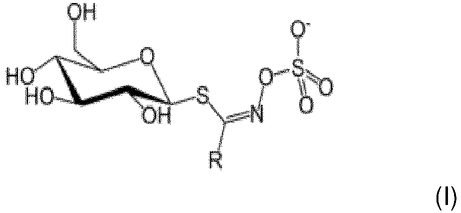 wobei R eine Einheit ist, die ausgewählt ist aus der Gruppe bestehend aus Allyl, Phenyl, Phenylalkyl, Napthyl, Benzyl, C₁-C₄-Alkyl, C₂-C₃-Alkenyl und C₂-C₃-Alkinyl.

3. Pharmazeutische Zusammensetzung zur Verwendung bei der Vorbeugung und/oder Behandlung einer Ektoparasiteninfektion bei Fischen, wobei die Zusammensetzung eine Verbindung der Formel (I) umfasst; 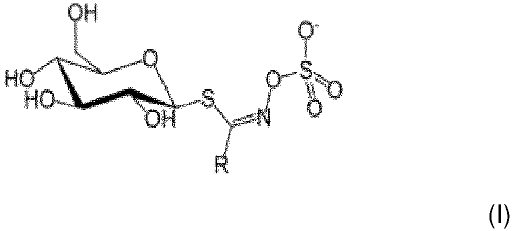 wobei R eine Einheit ist, die ausgewählt ist aus der Gruppe bestehend aus Allyl, Phenyl, Phenylalkyl, Napthyl, Benzyl, C₁-C₄-Alkyl oder C₂-C₃-Alkenyl oder C₂-C₃-Alkinyl.

4. Fischfutterzusammensetzung zur Verwendung bei der Vorbeugung und/oder Behandlung einer Ektoparasiteninfektion bei Fischen, wobei die Zusammensetzung herkömmliche Futterbestandteile umfasst, wie Lipide, Proteine, Kohlenhydrate, Vitamine und Mineralien, **dadurch gekennzeichnet, dass** die Futterzusammensetzung einen Senf umfasst.

5. Fischfutter zur Verwendung nach Anspruch 4, wobei die Zusammensetzung Senfpulver umfasst.

6. Fischfutter zur Verwendung nach Anspruch 5, wobei der Senf Glucosinolat umfasst, und wobei das Futter 0,5 - 15 µmol Glucosinolat pro Gramm des Futters, vorzugsweise 1,0 - 5 µmol pro Gramm des Futters und mehr bevorzugt µmol pro Gramm des Futters umfasst.

7. Fischfutter zur Verwendung nach einem der Ansprüche 1 bis 2 oder 4 bis 6, wobei das Fischfutter die Erkennung und/oder Anziehung zwischen dem Ektoparasiten und dem Fisch hemmt.

8. Fischfutter zur Verwendung nach einem der Ansprüche 1 bis 2 oder 4 bis 6, wobei das Fischfutter das Immunsystem des Fisches verbessert.

9. Fischfutter zur Verwendung nach Anspruch 8, wobei das Immunsystem des Fisches verbessert wird, bevor der Fisch mit Ektoparasiten infiziert wird, oder wobei das Immunsystem des Fisches verbessert wird, nachdem der Fisch mit Ektoparasiten infiziert ist.

10. Fischfutter zur Verwendung nach einem der Ansprüche 1 bis 2 oder 5 bis 9, wobei der Fisch ein Salmonid ist.

11. Fischfutter zur Verwendung nach Anspruch 10, wobei der Salmonid ausgewählt ist aus der Gruppe bestehend aus atlantischem Lachs, pazifischem Lachs, Königslachs, Regenbogenforelle, Rotforelle und anderen Farmlachsarten.

12. Fischfutter oder -zusammensetzung zur Verwendung nach einem der vorstehenden Ansprüche, wobei der Ektoparasit ein kopepodischer Ektoparasit ist.

13. Fischfutter oder -zusammensetzung zur Verwendung nach einem der vorstehenden Ansprüche, wobei der Ektoparasit eine Fischlaus ist.

14. Fischfutter oder -zusammensetzung zur Verwendung nach Anspruch 13, wobei der Ektoparasit *Lepeophtheirus salmonis* ist, und vorzugsweise wobei der Ektoparasit *Caligus rogercresseyi* ist.

## Revendications

1. Composition d'alimentation de poisson pour utilisation dans la prévention et/ou le traitement d'une infection par ectoparasite chez le poisson, dans laquelle la composition comprend des ingrédients alimentaires classiques tels que des lipides, des protéines, des glucides, des vitamines et des minéraux, **caractérisée en ce que** la composition d'alimentation comprend un composé de formule (I) ; 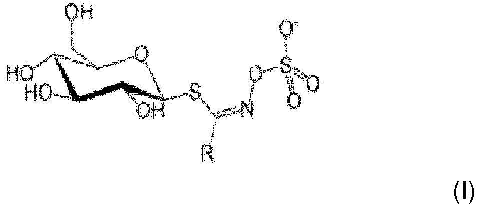 dans laquelle R est une entité choisie dans le groupe constitué d'allyle, phényle, phénylalkyle, naphtyle, benzyle, alkyle en C₁-C₄ ou alcényle en C₂-C₃ ou alcynyle en C₂-C₃

2. Composition d'alimentation de poisson pour utilisation dans la perturbation d'un processus d'identification de poisson (hôte) d'ectoparasite, traitant ainsi ou empêchant une infection par ectoparasite chez le poisson, dans laquelle l'aliment comprend des ingrédients alimentaires classiques tels que des lipides, des protéines, des glucides, des vitamines et des minéraux, **caractérisée en ce que** l'aliment est donné audit poisson et que la composition comprend un composé glucosinolate de formule (I) ; 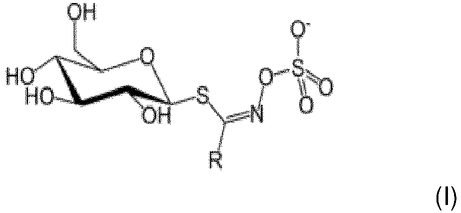 dans laquelle R est une entité choisie dans le groupe constitué d'allyle, phényle, alkyle phényle, naphtyle, benzyle, alkyle en C₁-C₄, alcényle en C₂-C₃ et alcynyle en C₂-C₃.

3. Composition pharmaceutique pour utilisation dans la prévention et/ou le traitement d'une infection par ectoparasite chez le poisson, dans laquelle ladite composition comprend un composé de formule (I); 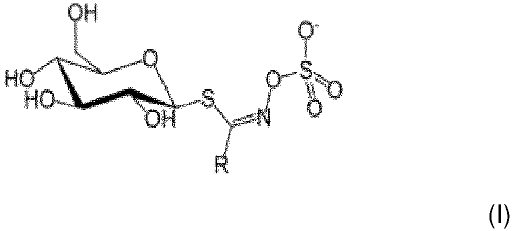 dans laquelle R est une entité choisie dans le groupe constitué d'allyle, phényle, alkyle phényle, naphtyle, benzyle, alkyle en C₁-C₄ ou alcényle en C₂-C₃ ou alcynyle en C₂-C₃.

4. Composition d'alimentation de poisson pour utilisation dans la prévention et/ou le traitement d'une infection par ectoparasite chez le poisson, dans laquelle la composition comprend des ingrédients alimentaires classiques tels que des lipides, des protéines, des glucides, des vitamines et des minéraux, **caractérisée en ce que** la composition d'alimentation comprend une moutarde.

5. Aliment de poisson pour utilisation selon la revendication 4, dans lequel ladite composition comprend de la poudre de moutarde.

6. Aliment de poisson pour utilisation selon la revendication 5, dans lequel ladite moutarde comprend du glucosinolate, et dans lequel l'aliment comprend de 0,5 à 15 µmoles de glucosinolate par gramme de l'aliment, de préférence de 1,0 à 5 µmoles par gramme de l'aliment et plus préférablement µmoles par gramme de l'aliment.

7. Aliment de poisson pour utilisation selon l'une quelconque des revendications 1 à 2 ou 4 à 6, dans lequel l'aliment de poisson inhibe la reconnaissance et/ou l'attraction entre l'ectoparasite et le poisson.

8. Aliment de poisson pour utilisation selon l'une quelconque des revendications 1 à 2 ou 4 à 6, dans lequel l'aliment de poisson améliore le système immunitaire du poisson.

9. Aliment de poisson pour utilisation selon la revendication 8, dans lequel le système immunitaire du poisson est amélioré avant que le poisson soit infecté par des ectoparasites, ou dans lequel le système immunitaire du poisson est amélioré après que le poisson est infecté par les ectoparasites.

10. Aliment de poisson pour utilisation selon l'une quelconque des revendications 1 à 2 ou 5 à 9, dans lequel ledit poisson est un salmonidé.

11. Aliment de poisson pour utilisation selon la revendication 10, dans lequel le salmonidé est choisi dans le groupe constitué par le saumon atlantique, le saumon coho, le chinook, la truite arc-en-ciel, l'omble chevalier et d'autres espèces de saumon d'élevage.

12. Aliment ou composition pour poisson pour utilisation selon une quelconque revendication précédente, dans lequel l'ectoparasite est un ectoparasite copépode.

13. Aliment ou composition pour poisson pour utilisation selon une quelconque revendication précédente, dans lequel ledit ectoparasite est le pou de mer.

14. Aliment ou composition pour poisson pour utilisation selon la revendication 13, dans lequel ledit ectoparasite est *Lepeophtheirus salmonis,* et de préférence dans lequel ledit ectoparasite est *Caligus rogercresseyi.*
